# EUROPÄISCHE PATENTSCHRIFT

(11) **EP 0 569 944 B1**
(45) Veröffentlichungstag und Bekanntmachung des Hinweises auf die Patenterteilung: **31.03.1999**
(21) Anmeldenummer: 93107665.7
(22) Anmeldetag: 11.05.1993
(51) Int. Cl.: A01N 43/50

(54) **Synergistisch wirksame Herbizidkombinationen**
Synergistic herbicide combination
Combinaison d'herbicides synergique

(30) Priorität: 15.05.1992 DE 4216130
(43) Veröffentlichungstag der Anmeldung: 18.11.1993
(60) Teilanmeldung: 98117230.7
(73) Patentinhaber: Hoechst Schering AgrEvo GmbH, 13342 Berlin (DE)
(72) Erfinder: Willms, Lothar, Dr., W-5416 Hillscheid (DE); Bauer, Klaus, Dr., W-6450 Hanau (DE); Bieringer, Hermann, Dr., W-6239 Eppstein/Ts. (DE); Hacker, Erwin, Dr., W-6203 Hochheim am Main (DE)
(74) Vertreter: Luderschmidt, Schüler & Partner GbR

(56) Entgegenhaltungen:
- EP-A- 0 181 628
- EP-A- 0 190 666
- EP-A- 0 485 207
- EP-A- 0 496 608
- EP-A- 0 524 394
- EP-A- 0 525 474
- FR-A- 2 584 265
- US-A- 4 749 404
- US-A- 5 030 271
- PROCEEDINGS OF THE WESTERN SOCIETY OF WEED SCIENCE, SEATTLE, Bd.44, 1991, US Seiten 97 - 98 D.ZAMORA & T.ALBY 'Weed control in seedling alfalfa with Imazethapyr'

## Beschreibung

Die Imidazolinone sind eine neuere Substanzklasse herbizider Wirkstoffe, die in verschiedenen Nutzpflanzenkulturen zur selektiven Unkrautbekämpfung eingesetzt werden. Dazu gehören Herbizide wie Imazaquin, Imazethapyr und Imazethamethapyr (AC 263222), die vor allem in Sojabohnen eingesetzt werden.

Neuerdings können diese Herbizide aber auch in Mais eingesetzt werden. Einerseits, weil resistente Maisarten entwickelt wurden und andererseits, weil neue Safener-Wirkstoffe gefunden wurden, die den selektiven Einsatz in Maiskulturen ermöglichen (P 4041120.6 und P 4041121.4).

Bei biologischen Versuchen zu den Einsatzmöglichkeiten im Mais wurde überraschenderweise gefunden, daß einige Mischungen von Imidazolinonen mit anderen selektiven Maisherbiziden ungewöhnliche synergistische Eigenschaften zeigen, die mit großen wirtschaftlichen Vorteilen verbunden sind.

Durch Nutzung solcher synergistischer Effekte können die Aufwandmengen der beteiligten Mischungspartner erheblich reduziert werden, und es gelingt, ein breites Spektrum mono- und dicotyler Unkräuter in einem Arbeitsgang zu bekämpfen. Die Reduktion der Aufwandmengen betrifft insbesondere die Imidazolinone, aber auch die Kombinationspartner bezüglich ihrer spezifischen Wirksamkeit.

Der Einsatz von Mischungen, die synergistische Effekte verursachen, ist mit großen wirtschaftlichen, aber auch ökologischen Vorteilen verbunden.

Unter Synergismus versteht man die sich gegenseitig verstärkende Wirkung von zwei oder mehr Stoffen. Im vorliegenden Fall bewirkt die kombinierte Anwendung der Herbizide, daß die Aufwandmengen der Herbizide reduziert werden können und trotzdem die gleiche herbizide Wirkung erreicht wird, bzw. daß mit den gleichen Aufwandmengen der Herbizide eine höhere als die zu erwartende Wirkung der einzeln eingesetzten Wirkstoffe erzielt wird (synergistischer Effekt).

Als Mischungspartner zur zusätzlichen Verbreiterung des Wirkungsspektrums vor allem bei dikotylen Unkräutern zeigte Dicamba synergistische Wirksamkeit.

Gegenstand der vorliegenden Erfindung sind also herbizide Mittel, enthaltend in einer synergistisch wirksamen Menge mindestens eine Verbindung aus der Gruppe Imazaquin (A1), Imazethapyr (A2) und Imazethamethapyr (A3, AC 263222) in Kombination mit dem Herbizid Dicamba (B1).

In bevorzugter Ausführungsform weisen die erfindungsgemäßen Mittel einen zusätzlichen Gehalt an mindestens einer Verbindung ausgewählt aus der Reihe bestehend aus 2,4-D (B2), Bromoxynil (B3), Pyridate, der Gruppe der Cyclohexandione, Gruppe der Sulfonylharnstoffe und der Gruppe der Pyridylsulfonylharnstoffe auf.

Die Erfindung betrifft insbesondere folgende Herbizide als Mischungspartner:
- Cyclohexandione, wie z. B. ICI-051 (2-[2-chlor-4-(methylsulfonyl)benzoyl]-1,3-cyclohexandion) (Chlormesulone, Sulcotrione),
- Sulfonylharnstoffe, wie z. B. Primisulfuron (B4), Nicosulfuron (B5), DPX-E 9636 = Renriduron oder Rimsulfuron (B6), Thifensulfuron, Amidosulfuron (B7),
- Pyridylsulfonylharnstoffe, wie z. B. in den deutschen Patentanmeldungen P 4000503.8 und P 4030577.5 beschrieben:
   3-(4,6-Dimethoxypyrimidin-2-yl)-1-[3-(N-methylsulfonyl-amino-2-pyridyl-sulfonyl]-harnstoff, (siehe EP-A 402 316) (B8),
   3-[(4,6-Dimethoxy-pyrimidin-2-yl]-1-[3-(3-fluorpropylsulfonyl-2-pyridyl-sulfonyl]-harnstoff,
   3-[(4,6-Dimethoxy-pyrimidin-2-yl]-1-[3-(2-methoxy-ethylsulfonyl-2-pyridyl-sulfonyl]-harnstoff,
   3-[(4,6-Dimethoxy-pyrimidin-2-yl)-1-[3-allylsulfonyl-2-pyridyl-sulfonyl]-harnstoff (siehe WO 91/15478 und EP-A-0 342 569),
   Methyl-3-chor-5-(4,6-dimethoxypyrimidin-2-yl-carbamoylsulfamoyl)-1-methylpyrazol-4-carboxylat (NC 319 = MON 12000, siehe EP 282 613) und
   CGA 152005 (1-(4-Methoxy-6-methyl-triazin-2-yl)-3-[2-(3,3,3-trifluoropropyl)-phenylsulfonyl]-harnstoff,
   sowie andere Sulfonylharnstoffe und Mischungen verschiedener obenerwähnter Sulfonylharnstoffe untereinander, wie z. B. eine Mischung aus Nicosulfuron und DPX-E 9636.

Als Mischungspartner kommen auch andere Herbizide in Betracht, die, wie Sulfonylharnstoffe, das Enzym Acetolacetatsynthase (ALS) hemmen, z. B. substituierte Pyrimidine, wie z. B. 2-(2-Benzyloxycarbonyl-pyrid-3-yloxy)-4,6-dimethoxypyrimidin (B9), und Triazine, herbizide Sulfonamide, wie z. B. Flumetsulam oder Triazolopyrimidinsulfonamide (Cordes, R. C. et al., Abstr. Meet. Weed Sci. Soc. Am. 31, 10, 1991, Percival, A., Pestic. Sci. 31, 568, 1991), oder andere verwandte Verbindungen und Mischungen solcher Wirkstoffe untereinander.

Die oben genannten Herbizide werden in Pesticide Manual (Brit. Crop Prot. Council, 9.Ausgabe (1991)), und in Weed Techn. (1991, Band 5) beschrieben.

Die Aufwandmengen der Herbizide liegen im allgemeinen zwischen 0,01 und 2 kg/ha, d. h. die Gesamtmenge an aufzuwendender Wirkstoffkombination beträgt etwa 0,02 bis 2 kg/ha. Die erforderliche Aufwandmenge kann in Abhängigkeit von den äußeren Bedingungen wie Temperatur, Feuchtigkeit u. a. schwanken, vorzugsweise liegt sie zwischen 0,05 und 1 kg/ha. Die Mischungsverhältnisse können in Abhängigkeit von den äußeren Bedingungen innerhalb weiter Grenzen schwanken. Vorzugsweise wird ein Mengenverhältnis zwischen 1 : 20 und 20 : 1 gewählt.

Diese synergistische Effekte werden sowohl bei Mischungen mit Imazethapyr als auch bei Anwendung mit anderen Imidazolinone erzielt. Eine Kombination der Wirkstoffe bedeutet, daß die herbiziden Wirkstoffe gemeinsam ausgebracht oder als sog. split-Applikation einige Tage nacheinander ausgebracht werden. In jedem Falle reagieren die Unkräuter mit erhöhter Sensibilität, so daß mit dem Einsatz geringerer Aufwandmengen eine sehr gute Bekämpfung erzielt werden kann.

In den folgenden Beispielen wird die Erfindung näher erläutert, ohne daß diese darauf beschränkt ist. Prozentangaben beziehen sich auf das Gewicht, sofern keine anderen Angaben gemacht sind.

Die erwähnten Herbizide können sowohl als Tankmischungen eingesetzt werden, wobei jeder Wirkstoff einzeln formuliert ist und erst zum Zeitpunkt der Anwendung mit anderen formulierten Herbiziden im Spritztank des Sprühgerätes gemischt wird, oder sie können schon gemeinsam formuliert werden und zwar auf verschiedene Art, je nachdem welche biologischen und/oder chemischphysikalischen Parameter vorgegeben sind. Als Formulierungsmöglichkeiten kommen beispielsweise in Frage: Spritzpulver (WP), emulgierbare Konzentrate (EC), wasserlösliche Pulver (SP), wasserlösliche Konzentrate (SL), konzentrierte Emulsionen (EW) wie Öl-in-Wasser und Wasser-in-Öl-Emulsionen, versprühbare Lösungen oder Emulsionen, Kapselsuspensionen (CS), Dispersionen auf Öl- oder Wasserbasis (SC), Suspoemulsionen, Suspensionskonzentrate, Stäubemittel (DP), ölmischbare Lösungen (OL), Beizmittel, Granulate (GR) in Form von Mikro-, Sprüh-, Aufzugs- und Adsorptionsgranulaten, Granulate für die Boden- bzw. Streuapplikation, wasserlösliche Granulate (SG), wasserdispergierbare Granulate (WG), ULV-Formulierungen, Mikrokapseln und Wachse.

Diese einzelnen Formulierungstypen sind im Prinzip bekannt und werden beispielsweise beschrieben in: Winnacker-Küchler, "Chemische Technologie" Band 7, C. Hauser Verlag München, 4. Auflage 1986; Wade van Valkenburg, "Pesticide Formulations", Marcel Dekker N. Y., 1973; K. Martens, "Spray Drying Handbook", 3rd Edition 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Edition, Darland Books, Caldwell N. J.; H. v. Olphen "Instruction to Clay Colloid Chemistry", 2nd Edition, J. Wiley & Sons, N. Y., Marsden "Solvents Guide", 2nd Edition, Interscience, N. Y. 1963; McCutcheon's "Detergents and Emulsifiers Annual", MC Publ. Corp., Ridgewood N. J.; Sisley and Wood, "Encyclopedia of Surface Active Agents", Chem. Publ. Co. Inc., N. Y. 1964; Schönfeldt, "Grenzflächenaktive Äthylenoxidaddukte", Wiss. Verlagsgesell., Stuttgart 1976; Winnacker-Küchler "Chemische Technologie", Band 7, C. Hauser Verlag München, 4. Auflage 1986.

Auf der Basis dieser Formulierungen lassen sich auch Kombinationen mit anderen pestizid wirksamen Stoffen, Düngemitteln und/oder Wachstumsregulatoren, herstellen, z. B. in Form einer Fertigformulierung oder als Tankmix.

Spritzpulver sind in Wasser gleichmäßig dispergierbare Präparate, die neben dem Wirkstoff außer einem Verdünnungs- oder Inertstoff noch Netzmittel, z. B. polyoxethylierte Alkylphenole, polyoxethylierte Fettalkohole und Fettamine, Fettalkoholpolyglykolethersulfate, Alkansulfonate oder Alkylarylsulfonate und Dispergiermittel, z. B. ligninsulfonsaures Natrium, 2,2-Dinaphthylmethan-6,6'-disulfonsaures Natrium, dibutylnaphthalinsulfonsaures Natrium oder auch oleylmethyltaurinsaures Natrium enthalten.

Emulgierbare Konzentrate werden durch Auflösen des Wirkstoffes in einem organischen Lösungsmittel, z. B. Butanol, Cyclohexanon, Dimethylformamid, Xylol oder auch höhersiedenden Aromaten oder Kohlenwasserstoffen unter Zusatz von einem oder mehreren Emulgatoren hergestellt. Als Emulgatoren können beispielsweise verwendet werden: Alkylarylsulfonsaure Calzium-Salze wie
Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid Kondensationsprodukte (z. B. Blockpolymere), Alkylpolyether, Sorbitanfettsäureester, Polyoxyethylensorbitanfettsäureester oder Polyoxethylensorbitester.

Stäubemittel erhält man durch Vermahlen des Wirkstoffs mit fein verteilten festen Stoffen, z. B. Talkum, natürlichen Tonen, wie Kaolin, Bentonit und Pyrophyllit, oder Diatomeenerde.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z. B. Polyvinylalkohol, polyacrylsaures Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden.

Die agrochemischen Zubereitungen enthalten in der Regel 0,1 bis 99 Gew.-%, insbesondere 0,1 bis 95 Gew.-% des Wirkstoffgemischs und 1 bis 99,9 Gew.-%, insbesondere 5 bis 99,8 Gew.-%, eines festen oder flüssigen Zusatzstoffes und 0 bis 25 Gew.-%, insbesondere 0,1 bis 25 Gew.-% eines Tensides.

In Spritzpulvern beträgt die Wirkstoffkonzentration z. B. etwa 10 bis 90 Gew.-%, der Rest besteht aus üblichen Formulierungsbestandteilen. Bei emulgierbaren Konzentraten beträgt die Wirkstoffkonzentration etwa 1 bis 80 Gew.-% Wirkstoffe. Staubförmige Formulierungen enthalten etwa 1 bis 20 Gew.-% an Wirkstoffen, versprühbare Lösungen etwa 0,2 bis 20 Gew.-% Wirkstoffe. Bei Granulaten, wie wasserdispergierbaren Granulaten, hängt der Wirkstoffgehalt zum Teil davon ab, ob die wirksame Verbindung flüssig oder fest vorliegt. In der Regel liegt der Gehalt bei den in Wasser dispergierbaren Granulaten zwischen 10 und 90 Gew.-%. Daneben enthalten die genannten Wirkstofformulierungen gegebenenfalls die jeweils üblichen Haft-, Netz-, Dispergier-, Emulgier-, Penetrations-, Lösungsmittel, Füll- oder Trägerstoffe.

Zur Anwendung werden die in handelsüblicher Form vorliegenden Formulierungen gegebenenfalls in üblicher Weise verdünnt, z. B. bei Spritzpulvern, emulgierbaren Konzentraten, Dispersionen und wasserdispergierbaren Granulaten mittels Wasser. Staubförmige Zubereitungen, Granulate sowie versprühbare Lösungen werden vor der Anwendung üblicherweise nicht mehr mit weiteren inerten Stoffen verdünnt. Besonders gute Wirksamkeiten der erfindungsgemäßen Mittel können erzielt werden, wenn zusätzlich zu den in den Formulierungen enthaltenen Tensiden weitere Netzmittel in Konzentrationen von 0,1 bis 0,5 Gew.-% im Tank-mix-Verfahren zugesetzt werden, z. B. nichtionische Netzmittel oder Netzmittel vom Typ der Fettalkoholpolyolethersulfate (siehe z. B. Deutsche Patentanmeldung P 4029304.1).

Folgende Beispiele dienen zur Erläuterung der Erfindung:

Formulierungsbeispiele:
a) Ein Stäubemittel wird erhalten, indem man 10 Gew.-Teile einer Verbindung vom Typ des Imidazolinons und einem oder mehrere Mischungspartner, wie auf den Seiten 2 - 3 erwähnt, und 90 Gew.-Teile Talkum als Inertstoff mischt und in einer Schlagmühle zerkleinert.
b) Ein in Wasser leicht dispergierbares, benetzbares Pulver wird erhalten, indem man 25 Gew.-Teile einer Verbindung vom Typ des Imidazolinons und einen oder mehrere Kombinationspartner, wie auf den Seiten 2 - 3 erwähnt, 64 Gew.-Teile kaolinhaltigen Quarz als Inertstoff, 10 Gew.-Teile ligninsulfonsaures Kalium und 1 Gew.-Teil oleoylmethyltaurinsaures Natrium als Netz- und Dispergiermittel mischt und in einer Stiftmühle mahlt.
c) Ein in Wasser leicht dispergierbares Dispersionskonzentrat wird erhalten, indem man 20 Gew.-Teile einer Verbindung vom Typ des Imidazolinons und einen oder mehrere Kombinationspartner, wie auf den Seiten 2 - 3 erwähnt, 6 Gew.-Teile Alkylphenolpolyglykolether (Triton® X 207), 3 Gew.-Teile Isotridecanolpolyglykolether (8 EO) und 71 Gew.-Teile paraffinischem Mineralöl (Siedebereich z. B. ca. 255 bis über 277 °C) mischt und in einer Reibkugelmühle auf eine Feinheit von unter 5 Mikron vermahlt.
d) Ein emulgierbares Konzentrat wird erhalten aus 15 Gew.-Teilen einer Verbindung vom Typ des Imidazolinons und einem oder mehreren Kombinationspartnern, wie auf den Seiten 2 - 3 erwähnt, 75 Gew.-Teilen Cyclohexanon als Lösemittel und 10 Gew.-Teilen oxethyliertes Nonylphenol als Emulgator.
e) Ein in Wasser dispergierbares Granulat wird erhalten, indem man 75 Gew.-Teile einer Verbindung vom Typs des Imidazolinons und eines oder mehrerer Kombinationspartner, wie auf den Seiten 2 - 3 erwähnt,

| | |
|---|---|
| 10 '' | ligninsulfonsäures Calcium, |
| 5 '' | Natriumlaurylsulfat, |
| 3 '' | Polyvinylalkohol und |
| 7 '' | Kaolin |

mischt, auf einer Stiftmühle mahlt und das Pulver in einem Wirbelbett durch Aufsprühen von Wasser als Granulierflüssigkeit granuliert.
f) Ein in Wasser dispergierbares Granulat wird auch erhalten, indem man 25 Gew.-Teile einer Verbindung vom Typ Imidazolinon und eines oder mehrerer Kombinationspartner, wie auf den Seiten 2 - 3 erwähnt,

| | |
|---|---|
| 5 '' | 2,2'-dinaphthylmethan-6,6'-disulfonsaures Natrium, |
| 2 '' | oleoylmethyltaurinsaures Natrium, |
| 1 '' | Polyvinylalkohol, |
| 17 '' | Calciumcarbonat und |
| 50 '' | Wasser |

auf einer Kolloidmühle homogenisiert und vorzerkleinert, anschließend auf einer Perlmühle mahlt und die so erhaltene Suspension in einem Sprühturm mittels einer Einstoffdüse zerstäubt und trocknet.

### Biologische Beispiele

Biologische Versuche mit verschiedenen Kombinationen von Imazethapyr bzw. anderen Imidazolinonen und Herbiziden, die ebenfalls in Mais selektiv eingesetzt werden, wurden sowohl im Gewächshaus als auch unter praktischen Bedingungen im Feld durchgeführt. Hierbei wurden zur Verbesserung der Selektivität an Mais auch Safener eingesetzt, wie sie aus P 4041120.6 und P 4041121.4 bekannt sind, um die Imidazolinone ohne Schädigung der Maiskultur anwenden zu können. Aus P 4141247.8 ist bekannt, daß die verwendeten Safenerwirkstoffe auch Schäden verhindern, die von Mischungen verschiedener Herbizide verursacht werden, d. h. die angewandten Safenerwirkstoffe schützen den Mais vor Schädigung durch verschiedene Wirkstoffkombinationen, wie sie hier geprüft wurden.

Die biologischen Versuche umfaßten ein weites Spektrum verschiedener Unkräuter und Ungräser, insbesondere solche, die von großer wirtschaftlicher Bedeutung im Maisanbau sind. Die Behandlung der Unkräuter erfolgt dabei überwiegend im Nachlaufverfahren. Die Ergebnisse ware über weite Teile hinweg sehr überraschend. Es wurde nämlich gefunden, daß zahlreiche Kombinationen von Imidazolinone, wie z. B. Imazethapyr mit verschiedenen Maisherbiziden ausgesprochen synergistische Wirksamkeit entfalten, d. h. die in der Praxis gefundene Effektivität ist deutlich höher als die additive Wirkung, die aufgrund der beobachteten Wirkung der Einzelkomponenten bei alleiniger Anwendung zu erwarten ist.

### Anwendungsbeispiel

Die Kulturpflanzen, Unkräuter und Ungräser wurden im Feld oder im Gewächshaus in Plastiktöpfen bis zum 4- bis 5-Blattstadium herangezogen (siehe unten) und dann mit erfindungsgemäßen Verbindungen im Nachauflaufverfahren behandelt. Die Herbizide wurden dabei in Form wäßriger Suspensionen bzw. Emulsionen mit einer Wasseraufwandmenge von umgerechnet 300 l/ha, ausgebracht. 4 Wochen nach der Behandlung wurden die Pflanzen visuell auf jede Art von Schädigung durch die aufgebrachten Herbizide bonitiert, wobei insbesondere das Ausmaß der anhaltenden Wachstumshemmung berücksichtigt wurde. Die Bewertung erfolgt in Prozentwerten im Vergleich zu unbehandelten Kontrollen.

Die erfindungsgemäßen eingesetzten Herbizide in Form der eingesetzten Mischungen zeigen wesentlich bessere Wirksamkeiten, als dies zu erwarten gewesen wäre. Die Herbizidkombinationen wirken somit synergistisch.

Im folgenden sind einige Ergebnisse aus der Vielzahl der durchgeführten Versuche dargestellt, ohne daß allerdings der Nachweis der synergistischen Wirksamkeit nur auf diese Beispiele beschränkt werden kann. Vielmehr wurde bei zahlreichen Kombinationen, wie sie auf den Seiten 2 - 3 erwähnt sind, unerwartet gute Effektivität beobachtet, die über die Wirkung hinausreicht, die aufgrund der Berechnung mit der Colby-Formel zu erwarten war. Die in den folgenden Tabellen in den Klammern angegebenen Werte entsprechen den Colby- Werten (siehe Calculation of synergistic and antagonistic responses of herbicide combinations, Weeds 15, Seiten 20-22 (1967)).

Die Produkte wurde im Nachauflauf im folgenden Wuchsstadium appliziert:

| | | |
|---|---|---|
| ECCR = Echinochloa cruss galli | 3 Blätter | 8-10 cm groß |
| SEPU = Setaria viridis | 3-4 Blätter | 7-9 cm groß |
| PAMI = Panicum miliaceum | 3 Blätter | 5-6 cm groß |
| DISA = Digitaria sanquinalis | 3 Blätter | 7-8 cm groß |
| DAST = Datura stramonium | 2-3 Seitentriebe | 7-8 cm groß |
| CHAL = Chenopodium album | 3 Seitentriebe | 3-4 cm groß |

Die Temperaturen betrugen im Gewächshaus tagsüber 20 bis 22°C und nachts 16 bis 18°C. Es wurden 2 Wiederholungen durchgeführt.

Die Ergebnisse zeigen, daß Kombinationen aus Imazethapyr und Sulfonylharnstoffderivaten in breitem Umfang eine synergistische Wirksamkeit aufweisen.

**Tabelle 1**

| | g AS/ha | ECCR | SEPU | PAMI |
|---|---|---|---|---|
| A2 | 25 | 97 | 97 | 75 |
| | 12,5 | 70 | 94 | 50 |
| | 6 | 45 | 85 | 40 |
| B1 | 500 | 20 | 0 | 10 |
| | 250 | 10 | 0 | 0 |
| | 125 | 0 | 0 | 0 |
| | 62,6 | 0 | 0 | 0 |
| A2 + B1 | 25 + 125 | 99 (97) | 100 (97) | 85 (75) |
| | 12,5 + 125 | 97 (70) | 100 (94) | 85 (50) |
| | 6 + 126 | 75 (45) | 97 (85) | 70 (40) |
| | 25 + 62,5 | 99 (97) | 99 (97) | 93 (75) |
| | 12,5 + 62,5 | 97 (70) | 99 (94) | 75 (50) |
| | 6 + 62,5 | 80 (45) | 95 (85) | 45 (40) |

## Patentansprüche

1. Herbizide Mittel, enthaltend in einer synergistisch wirksamen Menge mindestens eine Verbindung aus der Gruppe Imazaquin, Imazethapyr und Imazethamethapyr in Kombination mit dem Herbizid Dicamba.

2. Herbizide Mittel nach Anspruch 1, gekennzeichnet durch einen zusätzlichen Gehalt an mindestens einem Herbizid ausgewählt aus der Reihe bestehend aus 2,4-D, Bromoxynil, Pyridate, der Gruppe der Cyclohexandione, der Gruppe der Sulfonylharnstoffe und der Gruppe der Pyridylsulfonylharnstoffe.

3. Herbizide Mittel nach einem oder mehreren der Ansprüche 1 bis 2, die als Kombinationspartner mindestens ein Herbizid ausgewählt aus der Reihe
ICI-051 (2[2-chlor-4-methylsulfonyl)benzoyl]-1,3-cyclohexandion),
Primisulfuron, Nicosulfuron, DPX-E 9636, Thifensulfuron, Amidosulfuron,
3-(4,6-Dimethoxypyrimidin-2-yl)-1-[3-(N-methylsulfonyl-amino-2-pyridyl-sulfonyl]-harnstoff,
3-(4,6-Dimethoxypyrimidin-2-yl)-1-[3(3-fluorpropylsulfonyl-2-pyridyl-sulfonyl]-harnstoff,
3-(4,6-Dimethoxypyrimidin-2-yl)-1-[3-(2-methoxy-ethylsulfonyl-2-pyridyl-sulfonyl]-harnstoff,
3-(4,6-Dimethoxypyrimidin-2-yl)-1-[3-allylsulfonyl-2-pyridyl-sulfonyl]-harnstoff, Methyl-3-chlor-5-(4,6-dimethoxypyrimidin-2-yl-carbamoylsulfamoyl)-1-methylpyrazol-4-carboxylat,
1-(4-Methoxy-6-methyl-triazn-2-yl)-3-[2-(3,3,3-trifluoropropyl)-phenylsulfonyl]-harnstoff und
2-(2-Benzyloxycarbonyl-pyrid-3-yloxy)-4,6-dimethoxypyrimidin ethalten.

4. Mittel nach einem oder mehreren der Ansprüche 1 bis 3, dadurch gekennzeichnet, daß sie 0,1 bis 99 Gew.-% Wirkstoffe neben üblichen Formulierungshilfsmitteln enthalten.

5. Mittel nach einem oder mehreren der Ansprüche 1 bis 4, dadurch gekennzeichnet, daß sie die Wirkstoffe in einem Gewichtsverhältnis zwischen 1 : 20 und 20 : 1 enthalten.

6. Verfahren zur Herstellung eines Mittels nach einem oder mehreren der Ansprüche 1 bis 5, dadurch gekennzeichnet, daß man die Wirkstoffe in einer üblichen Pflanzenschutzformulierung aus der Gruppe, enthaltend Spritzpulver, emulgierbare Konzentrate, wäßrige Lösungen, Emulsionen, versprühbare Lösungen, Dispersionen auf Öl- oder Wasserbasis, Suspoemulsionen, Suspensionskonzentrate, ölmischbare Lösungen, Kapselsuspensionen, Granulate in Form von Mikro-, Sprüh-, Aufzugs- und Adsorptionsgranulaten, Stäubemittel, Beizmittel, Boden- oder Streugranulate, wasserdispergierbare Granulate, ULV-Formulierungen, Mikrokapseln und Wachse, formuliert.

7. Verfahren zur Bekämpfung von unerwünschten Pflanzen, dadurch gekennzeichnet, daß man auf diese oder deren Anbauflächen eine herbizid wirksame Menge eines Mittels nach einem oder mehreren der Ansprüche 1 bis 5 appliziert.

8. Verfahren nach Anspruch 7, dadurch gekennzeichnet, daß Unkräuter in Nutzpflanzenkulturen selektiv bekämpft werden.

9. Verfahren nach Anspruch 8, dadurch gekennzeichnet, daß die Nutzpflanzenkultur eine aus der Gruppe Weizen, Gerste, Roggen, Reis und Mais ist.

10. Verwendung der herbiziden Mittel nach einem oder mehreren der Ansprüche 1 bis 5 zur selektiven Unkrautbekämpfung in Nutzpflanzenkulturen.

## Claims

1. A herbicidal agent, containing, in a synergistically effective amount, at least one compound from the group comprising imazaquin, imazethapyr and imazethamethapyr in combination with the herbicide dicamba.

2. A herbicidal agent as claimed in claim 1, which additionally contains at least one herbicide selected from the series comprising 2,4-D, bromoxynil, pyridate, the cyclohexanedione group, the sulfonylurea group and the pyridylsulfonylurea group.

3. A herbicidal agent as claimed in one or more of claims 1 to 2, which contains, as a combination component, at least one herbicide selected from the series
ICI-051 (2-[2-chloro-4-methylsulfonylbenzoyl]-1,3-cyclohexanedione), primisulfuron, nicosulfuron,
DPX-E 9636, thifensulfuron, amidosulfuron,
3-(4,6-dimethoxypyrimidin-2-yl)-1-[3-(N-methylsulfonyl)amino-2-pyridylsulfonyl]urea,
3-(4,6-dimethoxypyrimidin-2-yl)-1-[3-(3-fluoropropylsulfonyl)-2-pyridylsulfonyl]urea,
3-(4,6-dimethoxypyrimidin-2-yl)-1-[3-(2-methoxyethylsulfonyl)-2-pyridylsulfonyl]urea,
3-(4,6-dimethoxypyrimidin-2-yl)-1-[3-allylsulfonyl-2-pyridylsulfonyl]urea,
methyl 3-chloro-5-(4,6-dimethoxypyrimidin-2-yl-carbamoylsulfamoyl)-1-methylpyrazole-4-carboxylate,
(1-(4-methoxy-6-methyltriazin-2-yl)-3-[2-(3,3,3-trifluoropropyl)phenylsulfonyl]urea and
2-(2-benzyloxycarbonylpyrid-3-yloxy)-4,6-dimethoxy-pyrimidine.

4. A composition as claimed in one or more of claims 1 to 3, which contains 0.1 to 99% by weight of active compounds in addition to customary formulation auxiliaries.

5. A composition as claimed in one or more of claims 1 to 4, which contains the active compounds in a weight ratio between 1:20 and 20:1.

6. A process for the preparation of a composition as claimed in one or more of claims 1 to 5, which comprises formulating the active compounds in a customary plant protection formulation from the group comprising wettable powders, emulsifiable concentrates, aqueous solutions, emulsions, sprayable solutions, dispersions on an oil or water basis, suspoemulsions, suspension concentrates, oil-miscible solutions, capsule suspensions, granules in the form of microgranules, spray granules, coated granules and adsorption granules, dusts, dressing agents, granules for the soil or for scattering, water-dispersible granules, ULV formulations, microcapsules and waxes.

7. A process for the control of undesired plants, which comprises applying a herbicidally active amount of a composition as claimed in one or more of claims 1 to 5 to them or their cultivation areas.

8. The process as claimed in claim 7, wherein weeds in cultivated plant crops are selectively controlled.

9. The process as claimed in claim 8, wherein the cultivated plant crop is one from the group comprising wheat, barley, rye, rice and corn.

10. The use of the herbicidal compositions as claimed in one or more of claims 1 to 5 for the selective control of weeds in cultivated plant crops.

## Revendications

1. Agent herbicide contenant en une quantité synergiquement efficace au moins un composé choisi parmi l'imazaquin, l'imazéthapyr et l'imazéthaméthapyr en combinaison avec l'herbicide dicamba.

2. Agent herbicide selon la revendication 1, caractérisé par une teneur en au moins un herbicide choisi parmi le 2,4-D, le bromoxynil, le pyridate, le groupe des cyclohexanediones, le groupe des sulfonylurées et le groupe des pyridylsulfonylurées.

3. Agent herbicide selon une ou plusieurs des revendications 1 à 2, qui contient comme partenaire de mélange au moins un herbicide choisi parmi le
ICI-051 (2-[2-chloro-4-méthylsulfonylbenzoyl]-1,3-cyclohexanedione),
le primisulfuron, le nicosulfuron , le DPX-E 9636, le thifensulfuron, l'amidosulfuron,
la 3-(4,6-diméthoxypyrimidin-2-yl)-1-[3-(N-méthylsulfonyl-amino)-2-pyridyl-sulfonyl]-urée,
la 3-(4,6-diméthoxypyrimidin-2-yl)-1-[3-(3-fluoropropyl-sulfonyl)-2-pyridyl-sulfonyl]-urée,
la 3-(4,6-diméthoxypyrimidin-2-yl)-1-[3-(2-méthoxy-éthyl-sulfonyl)-2-pyridyl-sulfonyl]-urée,
la 3-(4,6-diméthoxy-pyrimidin-2-yl)-1-[3-allylsulfonyl-2-pyridyl-sulfonyl]-urée,
le méthyl-3-chloro-5-(4,6-diméthoxypyrimidin-2-yl-carbamoylsulfamoyl)-1-méthylpyrazol-4-carboxylate,
la 1-(4-méthoxy-6-méthyl-triazin-2-yl)-3-[2-(3,3,3-trifluoropropyl)-phénylsulfonyl]-urée et
la 2-(2-benzyloxycarbonyl-pyrid-3-yloxy)-4,6-diméthoxypyridine.

4. Agent selon une ou plusieurs des revendications 1 à 3, caractérisé en ce qu'il contient 0,1 à 99% en poids de substances actives en plus des adjuvants usuels de formulation.

5. Agent selon une ou plusieurs des revendications 1 à 4, caractérisé en ce qu'il contient les substances actives dans une proportion en poids entre 1 : 20 et 20 : 1.

6. Procédé de préparation d'un agent selon une ou plusieurs des revendications 1 à 5, caractérisé en ce que l'on réalise la formulation des substances actives dans une formulation phytosanitaire usuelle choisie parmi les poudres à pulvériser les concentrés émulsionnables, les solutions aqueuses, les émulsions, les solutions pulvérisables, les dispersions à base d'huile ou d'eau, les suspoémulsions, les concentrés en suspension, les solutions miscibles à l'huile, les suspensions en capsules, les granulés sous la forme de microgranulés, de granulés pour pulvérisation, absorption et adsorption, les matières poudreuses, les agents désinfectants, les granulés pour application sur le sol ou par épandage, les granulés hydrodispersibles, les formulations ULV, les microcapsules et les cires.

7. Procédé de lutte contre des plantes nuisibles, caractérisé en ce que l'on applique une quantité herbicide efficace d'un agent selon une ou plusieurs des revendications 1 à 5 sur celles-ci ou sur la surface sur laquelle elles poussent.

8. Procédé selon la revendication 7, caractérisé en ce qu'on lutte de manière sélective contre les mauvaises herbes dans les cultures de plantes utiles.

9. Procédé selon la revendication 8, caractérisé en ce que la culture de plantes utiles est choisie parmi le froment, l'orge, le seigle, le riz et le maïs.

10. Utilisation des agents herbicides selon une ou plusieurs des revendications 1 à 5 pour la lutte sélective contre les mauvaises herbes dans les cultures de plantes utiles.
